(19) Europäisches Patentamt / European Patent Office / Office européen des brevets

(11) **EP 3 945 111 B1**

(12) **EUROPEAN PATENT SPECIFICATION**

(45) Date of publication and mention
of the grant of the patent:
**02.07.2025 Bulletin 2025/27**

(21) Application number: **20188512.6**

(22) Date of filing: **30.07.2020**

(51) International Patent Classification (IPC):
***C08L 23/08*** (2025.01)

(52) Cooperative Patent Classification (CPC):
(C-Sets available)
**C08L 23/08;** C08L 2205/035; C08L 2207/02;
C08L 2207/20; Y02W 30/62 (Cont.)

(54) **UPGRADED RECYCLED POLYETHYLENE POLYPROPYLENE BLEND**

VERBESSERTE RECYCELTE POLYETHYLEN-POLYPROPYLEN-MISCHUNG

MÉLANGE DE POLYPROPYLÈNE DE POLYÉTHYLÈNE RECYCLÉ VALORISÉ

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(43) Date of publication of application:
**02.02.2022 Bulletin 2022/05**

(73) Proprietor: **Borealis AG**
**1020 Vienna (AT)**

(72) Inventors:
• **DEFOER, Johan**
**2800 Mechelen (BE)**

• **AJELLAL, Noureddine**
**06850 Kulloo (FI)**
• **KAHLEN, Susanne Margarete**
**4021 Linz (AT)**

(74) Representative: **Maiwald GmbH**
**Elisenhof**
**Elisenstraße 3**
**80335 München (DE)**

(56) References cited:
**EP-A1- 2 423 257      EP-A1- 3 140 348**
**WO-A1-2018/206353    WO-A1-2019/224129**
**WO-A1-2020/070175**

(52)  Cooperative Patent Classification (CPC): (Cont.)

C-Sets
**C08L 23/08, C08L 23/10, C08L 23/14, C08L 23/16**

**Description**

**Field of Invention**

The present invention relates to upgraded recycled blends comprising predominantly polyethylene and polypropylene.

**Background**

The use of recycled materials, which are derived from a wide variety of sources is a must in the field of polyolefins. However, the recycling streams available all suffer from limited mechanical properties not allowing commercially attractive end uses. Various expensive booster polymers have been suggested for upgrading recycling streams rendering the recycling as such uneconomical. For this reason, there is at the moment very limited market for recycled blends; any upgrading component needs to be as cheap as thinkable. In blends comprising predominantly polyethylene and polypropylene, it is relatively easy to achieve higher impact strength through the addition of elastomers acting as compatibilizers like conventional ethylene-propylene rubbers or EPDM. WO 2015/169690 A1 suggests the incorporation of heterophasic ethylene-propylene copolymers (HECOs) comprising ethylene-octene-copolymers, which are commercially available, i.a. from Borealis Plastomers (NL) under the tradename Queo®, from DOW Chemical Corp (USA) under the tradename Engage®, or from ENI SpA (IT). However, the use of arbitrary heterophasic ethylene-propylene copolymers (HECOs) not necessarily yields good results, particularly with respect to stiffness. It was commonly believed that the limited stiffness could only be overcome by using plastomers having block copolymer nature such as provided by Dow Chemical as Dow Infuse OBC or Intune OBC plastomers. For example, INTUNE™ polypropylene-based OBCs (PP-OBCs) have been designed as compatibilizers rather than elastomers. They contain propylene-rich blocks compatible with polypropylene and ethylene-rich blocks compatible with polyethylene. It is readily understandable that the block copolymer introduces the options of having certain domains of higher stiffness and thereby overall increased stiffness. However, plastomers with block copolymer natures, which is easily detectable by NMR and further reflected by melting temperature, have the disadvantage of being relatively expensive. Apart from the use of OBC materials it is further known to incorporate random heterophasic copolymers (RAHECO) including a propylene ethylene random copolymer matrix and an ethylene propylene rubber as dispersed phase. However, the amount of RAHECOs required are frequently rather high. In addition to that, numerous final uses do not require excessive impact performance. The trash problem involving polymers understandably requires compatibilizers which allow repurposing the polymers in very high amounts in final products.

There was a deeply felt need of having a clever compatibilizer allowing the provision of upgraded polypropylene-polyethylene blends with a sufficiently high stiffness and moderately high impact strength at relatively low amounts of compatibilizer.

The present invention insofar provides

a polyethylene-polypropylene composition having a melt flow rate of 5.0 to 12.0 g/10min obtainable by blending

   a) 52 to 92 wt.-%, preferably 65 to 91 wt.-%, more preferably 70 to 90 wt.-% and most preferably 71 to 89 wt.-%, based on the total weight of the polyethylene-polypropylene composition of a blend (A) comprising

      A-1) polypropylene and
      A-2) polyethylene,

      wherein the weight ratio of polypropylene to polyethylene is from 19:1 to 7:3, and
      wherein blend (A) is a recycled material, which is recovered from a waste plastic material derived from post-consumer and/or industrial waste;
      and

   b) 5 to 35 wt.-%, preferably 5 to 22 wt.-%, more preferably 6 to 18 wt.-%, most preferably 7 to 17 wt.-%, based on the total weight of the polyethylene-polypropylene composition of a compatibilizer (B) selected from the group of $C_2C_4$ plastomers, $C_2C_6$ plastomers, $C_2C_8$ plastomers and mixtures thereof,
   having

      -    a DSC melting point of below 75 °C, preferably equal or below 73 °C, more preferably below 60 °C and most preferably in the range of 38 °C to 60°C(ISO11357);
      -    an $MFR_2$ (ISO1133, 2.16 kg load at 190 °C) of equal or below 1.5 g/10 min, preferably equal or below 1.0 g/10min, most preferably 0.1 to 0.5 g/10 min; and

- a density of equal or lower than 885 kg/m$^3$, preferably a density of equal or lower than 875 kg/m$^3$, most preferably 858 to 867 kg/ m$^3$ (ISO1183), and

c) 3 to 12 wt.-%, preferably 4 to 12 wt.-%, and most preferably 4 to 11 wt.-%, based on the total weight of the polyethylene-polypropylene composition of a random polypropylene copolymer having an MFR$_2$ (ISO1133, 2.16 kg load at 230 °C) of equal or below 1.0 g/10 min; and

d) 0 to 1.0 wt.-%, based on the total weight of the polyethylene-polypropylene composition of a stabilizer or mixture of stabilizers,

whereby the polyethylene-polypropylene composition has a tensile modulus (ISO 527-2) of at least 600 MPa, preferably of at least 700 MPa, more preferably of at least 800 MPa and most preferably of 850 to 1000 MPa.

The present invention further provides an article comprising, preferably consisting of the polyethylene-polypropylene composition according to present invention.

The present invention is also concerned with
a process for providing a polyethylene-polypropylene composition according to the present invention as defined above, whereby the process comprises the steps of:

a) providing blend (A) comprising polypropylene and polyethylene in a ratio of 19:1 to 7:3 in amount of 52 to 92 wt.-%, preferably 65 to 91 wt.-%, more preferably 70 to 90 wt.-% and most preferably 71 to 89 wt.-% based on the total weight of the polyethylene-polypropylene composition,
b) providing a compatibilizer (B) in an amount from 5 to 35 wt.-%, preferably 5 to 22 wt.-%, more preferably 6 to 18 wt.-% and most preferably 7 to 17 wt.-% based on the total weight of the polyethylene-polypropylene composition, whereby compatibilizer (B) is a C2C4 plastomer, C2C6 plastomer $C_2C_8$ plastomer and mixtures thereof, having

- a DSC melting point of below 75 °C, preferably equal or below 73 °C, more preferably below 60 °C and most preferably in the range of 38 °C to 60°C (ISO11357);
- an MFR$_2$ (ISO1133, 2.16 kg load at 190 °C) of equal or below 1.5 g/10 min, preferably equal or below 1.0 g/10min, most preferably 0.1 to 0.5 g/10 min; and
- a density of equal or lower than 885 kg/m$^3$, preferably a density of equal or lower than 875 kg/m$^3$, most preferably 858 to 867 kg/ m$^3$ (ISO1183);

c) providing a random polypropylene copolymer having an MFR$_2$ (ISO1133, 2.16 kg load at 230 °C) of equal or below 1.0 g/10 min in an amount of 3 to 12 wt.-%, preferably 4 to 12 wt.-%, and most preferably 4 to 11 wt.-% with respect to the total weight of the polyethylene-polypropylene composition;
d) melting and mixing the blend in the presence of 0 to 1.0 wt.-% of a stabilizer or a mixture of stabilizers with respect to the total weight of the polyethylene-polypropylene composition, and
d) optionally pelletizing.

In a further aspect, the present invention provides

use of a compatibilizer (B) being a $C_2C_8$ plastomer,
having

- a DSC melting point of below 75 °C, preferably equal or below 73 °C, more preferably below 60 °C and most preferably in the range of 38 °C to 60°C(ISO11357);
- an MFR$_2$ (ISO1133, 2.16 kg load at 190 °C) of equal or below 1.5 g/10 min, preferably equal or below 1.0 g/10min, most preferably 0.1 to 0.5 g/10 min; and
- a density of equal or lower than 885 kg/m$^3$, preferably a density of equal or lower than 875 kg/m$^3$, most preferably 858 to 867 kg/ m$^3$ (ISO1183),

together with a
a random polypropylene copolymer having an MFR$_2$ (ISO1133, 2.16 kg load at 230 °C) of equal or below 1.0 g/10 min for improving the impact - stiffness balance of a blend (A) comprising

A-1) polypropylene and
A-2) polyethylene,

wherein the weight ratio of polypropylene to polyethylene is from 19:1 to 7:3, and

wherein blend (A) is a recycled material, which is recovered from a waste plastic material derived from post-consumer and/or industrial waste; and

wherein blend (A) is present in an amount of

52 to 92 wt.-%, preferably 65 to 91 wt.-%, more preferably 70 to 90 wt.-% and most preferably 71 to 89 wt.-% with respect to the final polyethylene-polypropylene composition, and

wherein compatibilizer (B) is present in an amount of 5 to 35 wt.-%, preferably 5 to 22 wt.-%, more preferably 6 to 18 wt.-%, most preferably 7 to 17 wt.-%

with respect to the final polyethylene-polypropylene composition, and

wherein the random polypropylene copolymer has an $MFR_2$ (ISO1133, 2.16 kg load at 230 °C) of equal or below 1.0 g/10 min and is present in an amount of 3 to 12 wt.-%, preferably 4 to 12 wt.-%, and most preferably 4 to 11 wt.-% with respect to the final polyethylene-polypropylene composition.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below. Unless clearly indicated otherwise, use of the terms "a," "an," and the like refers to one or more.

A plastomer is a copolymer composed of units derived from ethylene and 1-butene, ethylene and 1-hexene or ethylene and 1-octene. Plastomer indicates the copolymer has rubber like properties.

"Upgrading" means improving one or more properties such as Charpy notched impact and/or stiffness such as reflected by the tensile modulus.

For the purpose of the present invention

"improving the impact - stiffness balance" shall mean that

the Charpy notched impact strength (1eA) (non-instrumented, ISO 179-1 at +23 °C) is at least 14 kJ/m$^2$ and simultaneously the tensile modulus in MPa (ISO 527-2) is at least 850 to 1000 MPa.

For the purposes of the present description, the term "recycled waste" or "recycled material" is used to indicate a material recovered from both post-consumer waste and industrial waste, as opposed to virgin polymers. Post-consumer waste refers to objects having completed at least a first use cycle (or life cycle), i.e. having already served their first purpose; while industrial waste refers to manufacturing scrap, which does not normally reach a consumer. The term "virgin" denotes the newly produced materials and/or objects prior to their first use, which have not already been recycled. Virgin materials and recycled materials easily can be differentiated based on absence or presence of contaminants such as limonene and/or fatty acids and/or paper and/or wood. Polypropylene-polyethylene blends also can be differentiated with respect to their origin by presence of polystyrene and/or polyamide. Residual content denotes a content above the detection limit. Many different kinds of polyethylene or polypropylene can be present in "recycled material". The ratio polypropylene (A-1) versus polyethylene plus polyethylene copolymer (A-2) is determined experimentally by using isotactic polypropylene (iPP) and high density polyethylene (HDPE) for calibration. A polymer blend is a mixture of two or more polymeric components. In general, the blend can be prepared by mixing the two or more polymeric components. A "compatibilizer" is a substance in polymer chemistry, which is added to a blend of polymers with limited miscibility in order to increase their stability. "Polypropylene-polyethylene blend" refers to a composition containing both polypropylene and polyethylene including also polypropylene copolymers as well as polyethylene copolymers. As a direct determination of the polypropylene content and polyethylene content is not possible, the weight ratio polypropylene (A-1) to polyethylene (A-2) of 19:1 to 7:3 denotes the equivalent ratio as determined from calibration by iPP and HDPE and determination by IR spectroscopy. Stabilizers are selected from the group of antioxidants and/or light stabilizers.

## Compatibilizer (B)

The compatibilizer (B) according to the present invention is a plastomer selected from $C_2C_4$ plastomers, $C_2C_6$ plastomers, $C_2C_8$ plastomers and mixtures thereof, whereby the plastomer has

- a DSC melting point of below 75 °C, preferably equal or below 73 °C, more preferably below 60 °C and most preferably in the range of 38 °C to 60 °C (ISO11357);
- an $MFR_2$ (ISO1133, 2.16 kg load at 190 °C) of equal or below 1.5 g/10 min, preferably equal or below 1.0 g/10min, most preferably 0.1 to 0.5 g/10 min ; and a density of equal or lower than 885 kg/m$^3$, preferably a density of equal or lower than 875 kg/m$^3$, most preferably 858 to 867 kg/ m$^3$ (ISO1183). Most preferably the compatibilizer (B) according to the present invention is a C$_2$C$_8$ plastomer, whereby the plastomer has

- a DSC melting point of below 75 °C, preferably equal or below 73 °C, more preferably below 60 °C and most preferably in the range of 38 °C to 60°C (ISO11357);
- an MFR$_2$ (ISO1133, 2.16 kg load at 190 °C) of equal or below 1.5 g/10 min, preferably equal or below 1.0 g/10min, most preferably 0.1 to 0.5 g/10 min ; and
- a density of equal or lower than 885 kg/m$^3$, preferably a density of equal or lower than 875 kg/m$^3$, most preferably 858 to 867 kg/ m$^3$ (ISO1183)

Such compatibilizers (and also the preferred compatibilizers as described below) are commercially available. The melting point excludes the presence of blocky character. The compatibilizer (B) according to the present invention preferably has a DSC melting point of equal or below 73 °C, more preferably below 60 °C (ISO11357). In a further aspect, the compatibilizer (B) according to the present invention preferably has a density of equal or lower than 875 kg/m$^3$ (ISO1183). C$_2$C$_8$ plastomers are particularly preferred.

When compatibilizer (B) is used without component (C) as described below, the impact strength will be increased when compared with blend (A). It should be understood that use of compatibilizer (B) in an amount of more 23 wt.% or more is possible but not really desirable since the aim is to dump blend (A) in an amount as high as possible in the resulting composition. Moreover, there is no need for having excessively high impact strength values.

**Random polypropylene copolymer (C)**

The random polypropylene copolymer (C) according to the present invention has an MFR$_2$ (ISO1133, 2.16 kg load at 230 °C) of equal or below 1.0 g/10 min. Most preferably the random polypropylene copolymer (C) according to the present invention has an MFR$_2$ (ISO1133, 2.16 kg load at 230 °C) of 0.1 to 0.5 g/10min. The low melt flow rate ensures that sufficient polymer chains of rather long length are introduced. The rather low melt flow rate of the random polypropylene copolymer (C) contributes to impact and stiffness. The random polypropylene copolymer (C) according to the present invention preferably is a propylene ethylene copolymer, i.e. the copolymer is only composed of units derived from propylene and ethylene. Random polypropylene copolymer (C) according to the present invention are commercially available.

The random polyproyplene according to the present invention preferably has a tensile modulus of at least 950 MPa (ISO 527-2).

In yet a further aspect the random polypropylene according to the present invention preferably has an ethylene content of 3.0 to 6.0 wt.-%.

It is preferred that the random polypropylene according to the present invention having an ethylene content of 3.0 to 6.0 wt.-% is only composed of units derived from propylene and ethylene.

Most preferably the random polypropylene according to the present invention has an ethylene content of 3.0 to 6.0 wt.-%, is only composed of units derived from propylene and ethylene and has a tensile modulus of at least 950 MPa (ISO 527-2).

**Polypropylene-polyethylene blend (A)**

The polypropylene-polyethylene blend (A) according to present invention preferably has one or more of the following properties

a) a content of limonene as determined by using solid phase microextraction (HS-SPME-GC-MS) of from 0.1 ppm to 100 ppm, preferably from 0.1 ppm to 50 ppm, more preferably from 0.1 ppm to 20 ppm, most preferably from 0.1 ppm to 5 ppm;
b) a content of fatty acid(s) as determined by using solid phase microextraction (HS-SPME-GC-MS) of 0.1 to 100 ppm;
c) a content of polyamide(s) as determined by IR of 0.05 to 5.0 wt.-%;
d) a content of polystyrene(s) as determined by IR of 0.05 to 6.0 wt.-%

Preferably the polypropylene-polyethylene blend (A) according to the present invention is a recycled material, more preferably originates from household trash. In a specific and particularly preferred embodiment blend (A) originates from plastic waste in the oceans.

The polypropylene-polyethylene blend (A) according to the present invention comprises

(A-1) polypropylene and

(A-2) polyethylene
whereby the weight ratio of polypropylene (A-1) to polyethylene (A-2) is 19:1 to 7:3.

It should be understood that polypropylene-polyethylene blend (A) may vary broadly in composition, i.e. may include polypropylene homopolymers, polypropylene copolymers, polyethylene homopolymers, and polyethylene copolymers. As a direct determination of the polypropylene content and polyethylene content is not possible, the weight ratio polypropylene (A-1) to polyethylene (A-2) of 19:1 to 7:3 is the equivalent ratio as determined from calibration by iPP and HDPE.

Conventionally the polypropylene-polyethylene blend (A) according to the present invention may have one or more of the following:

- residual PET determined as described in the experimental part;
- residual talc and chalk content as described in the experimental part;
- residual content of metals (determined by x ray fluorescence (XRF)
- residual amount of paper as described in the experimental part
- residual amount of wood as described in the experimental part
- total free fatty acid content of 0.1 to 100 ppm as measured by using headspace solid phase micro-extraction (HS-SPME-GC-MS).

It is preferred that components a) to d) as described herein add up to 100 wt.-%.

## Detailed description

The present invention is particularly concerned with a polyethylene-polypropylene composition having a melt flow rate of 5.0 to 12.0 g/10min obtainable by blending

a) 71 to 89 wt.-% of a blend (A) comprising

A-1) polypropylene and
A-2) polyethylene,
wherein the weight ratio of polypropylene to polyethylene is from 19:1 to 7:3, and
wherein blend (A) is a recycled material, which is recovered from a waste plastic material derived from post-consumer and/or industrial waste;
and

b) 7 to 17 wt.-% of a compatibilizer (B) being a $C_2C_8$ plastomer,
having

- a DSC melting point of below 75 °C, preferably equal or below 73 °C, more preferably below 60 °C and most preferably in the range of 38 °C to 60°C (ISO11357);
- an $MFR_2$ (ISO1133, 2.16 kg load at 190 °C) of equal or below 1.5 g/10 min, preferably equal or below 1.0 g/10min, most preferably 0.1 to 0.5 g/10 min; and
- a density of equal or lower than 885 kg/m$^3$, preferably a density of equal or lower than 875 kg/m$^3$, most preferably 858 to 867 kg/ m$^3$ (ISO1183),
and

c) 4 to 11 wt.-% of a random polypropylene copolymer having an $MFR_2$ (ISO1133, 2.16 kg load at 230 °C) of equal or below 1.0 g/10 min; and
d) 0 to 1.0 wt.-% of a stabilizer or mixture of stabilizers,
whereby the polyethylene-polypropylene composition has a tensile modulus within the range of 850 to 1000 MPa.

## Experimental Section

The following Examples are included to demonstrate certain aspects and embodiments of the invention as described in the claims. It should be appreciated by those of skilled in the art, however, that the following description is illustrative only and should not be taken in any way as a restriction of the invention.

## Test Methods

**a) Amount of iPP, Polystyrene, Polyethylene (and ethylene containing copolymers), and amount of Polyamide-6**

To establish different calibration curves different standards, iPP and HDPE and iPP, PS and PA6 were blended. For the quantification of the content of the foreign polymers, IR spectra were recorded in the solid-state using a Bruker Vertex 70 FTIR spectrometer. Films were prepared with a compression-molding device at 190 °C with 4 - 6 MPa clamping force. The thickness of the films for the calibration standards for iPP and HDPE was 300 $\mu$m and for the quantification of the iPP, PS and PA 6 50-100 $\mu$m film thickness was used. Standard transmission FTIR spectroscopy is employed using a spectral range of 4000-400 cm-1, an aperture of 6 mm, a spectral resolution of 2 cm-1, 16 background scans, 16 spectrum scans, an interferogram zero filling factor of 32 and Norton Beer strong apodization.

The absorption of the band at 1167 cm-1 in iPP is measured and the iPP content is quantified according to a calibration curve (absorption/thickness in cm versus iPP content in weight %).

The absorption of the band at 1601 cm-1 (PS) and 3300 cm-1 (PA6) are measured and the PS and PA6 content quantified according to the calibration curve (absorption/thickness in cm versus PS and PA content in wt.-%). The content of polyethylene and ethylene containing copolymers is obtained by subtracting (iPP+PS+PA6) from 100, taking into account the content of non-polymeric impurities as determined in the methods below. The analysis is performed as a double determination.

**b) Tensile modulus and Tensile strain at break**

were measured according to ISO 527-2 (test speed = traverse/cross head speed: for tensile modulus evaluation: 1 mm/min (0.05 -0.25 %measured extensometer), when 0.25 % reached, then 50 mm/min until break at 23 °C using injection molded specimens 1B prepared as described in EN ISO 1873-2 (dog bone shape, 4 mm thickness). The measurement was done after 96 h conditioning time at 23 °C of the specimen.

**c) The impact strength**

was determined as Charpy Notched Impact Strength according to ISO 179-1 eA at +23 °C, at 0°C, and at -20 °C on injection molded specimens of 80 x 10 x 4 mm$^3$ prepared according to EN ISO 1873-2. The measurement was done after 96 h conditioning time at 23 °C of the specimen.

**e) Comonomer content**

**Poly(propylene-co-ethylene) - ethylene content - IR spectroscopy**

Quantitative infrared (IR) spectroscopy was used to quantify the ethylene content of the poly(ethylene-co-propene) copolymers through calibration to a primary method. Calibration was facilitated through the use of a set of in-house non-commercial calibration standards of known ethylene contents determined by quantitative $^{13}$C solution-state nuclear magnetic resonance (NMR) spectroscopy. The calibration procedure was undertaken in the conventional manner well documented in the literature. The calibration set consisted of 38 calibration standards with ethylene contents ranging 0.2-75.0 wt.% produced at either pilot or full scale under a variety of conditions. The calibration set was selected to reflect the typical variety of copolymers encountered by the final quantitative IR spectroscopy method. Quantitative IR spectra were recorded in the solid-state using a Bruker Vertex 70 FTIR spectrometer. Spectra were recorded on 25x25 mm square films of 300 $\mu$m thickness prepared by compression moulding at 180 - 210°C and 4 - 6 MPa. For samples with very high ethylene contents (>50 mol%) 100 $\mu$m thick films were used. Standard transmission FTIR spectroscopy was employed using a spectral range of 5000-500 cm$^{-1}$, an aperture of 6 mm, a spectral resolution of 2 cm$^{-1}$, 16 background scans, 16 spectrum scans, an interferogram zero filling factor of 64 and Blackmann-Harris 3-term apodisation. Quantitative analysis was undertaken using the total area of the $CH_2$ rocking deformations at 730 and 720 cm$^{-1}$ ($A_Q$) corresponding to $(CH_2)_{>2}$ structural units (integration method G, limits 762 and 694 cm$^{-1}$). The quantitative band was normalised to the area of the CH band at 4323 cm$^{-1}$ ($A_R$) corresponding to CH structural units (integration method G, limits 4650, 4007 cm$^{-1}$). The ethylene content in units of weight percent was then predicted from the normalised absorption ($A_Q / A_R$) using a quadratic calibration curve. The calibration curve having previously been constructed by ordinary least squares (OLS) regression of the normalised absorptions and primary comonomer contents measured on the calibration set.

**Poly(propylene-co-ethylene) - ethylene content - $^{13}$C NMR spectroscopy**

Quantitative $^{13}$C{$^1$H} NMR spectra were recorded in the solution-state using a Bruker Avance III 400 NMR spectrometer operating at 400.15 and 100.62 MHz for $^1$H and $^{13}$C respectively. All spectra were recorded using a $^{13}$C

optimised 10 mm extended temperature probehead at 125°C using nitrogen gas for all pneumatics. Approximately 200 mg of material was dissolved in 3 ml of 1,2-tetrachloroethane-d$_2$ (TCE-d$_2$) along with chromium (III) acetylacetonate (Cr(acac)$_3$) resulting in a 65 mM solution of relaxation agent in solvent (Singh, G., Kothari, A., Gupta, V., Polymer Testing 28 5 (2009), 475).

To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., et al. J. Mag. Reson. 187 (2007) 225, and in Busico, V., et al, Macromol. Rapid Commun. 2007, 28, 1128). A total of 6144 (6k) transients were acquired per spectra. Quantitative $^{13}$C{$^1$H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer: fE = ( E / ( P + E ) The comonomer fraction was quantified using the method of Wang et. al. (Wang, W-J., Zhu, S., Macromolecules 33 (2000), 1157) through integration of multiple signals across the whole spectral region in the $^{13}$C{$^1$H} spectra. This method was chosen for its robust nature and ability to account for the presence of regio-defects when needed. Integral regions were slightly adjusted to increase applicability across the whole range of encountered comonomer contents. For systems with very low ethylene content where only isolated ethylene in PPEPP sequences were observed the method of Wang et. al. was modified reducing the influence of integration of sites that are no longer present. This approach reduced the overestimation of ethylene content for such systems and was achieved by reduction of the number of sites used to determine the absolute ethylene content to E = 0.5( S$\beta\beta$ + S$\beta\gamma$ + S$\beta\delta$ + 0.5( S$\alpha\beta$ + S$\alpha\gamma$ )) Through the use of this set of sites the corresponding integral equation becomes E = 0.5( I$_H$ +I$_G$ + 0.5( I$_C$ + I$_D$ )) using the same notation used in the article of Wang et. al. (Wang, W-J., Zhu, S., Macromolecules 33 (2000), 1157). Equations used for absolute propylene content were not modified. The mole percent comonomer incorporation was calculated from the mole fraction: E [mol%] = 100 * fE. The weight percent comonomer incorporation was calculated from the mole fraction: E [wt.%] = 100 * (fE * 28.06 ) / ( (fE * 28.06) + ((1-fE) * 42.08) ).

**f) Talc and chalk content**

TGA according to the following procedure:

Thermogravimetric Analysis (TGA) experiments were performed with a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The weight loss between ca. 550°C and 700°C (WCO$_2$) was assigned to CO$_2$ evolving from CaCO$_3$, and therefore the chalk content was evaluated as:

$$\text{Chalk content} = 100/44 \times \text{WCO2}$$

Afterwards the temperature was lowered to 300°C at a cooling rate of 20 °C/min. Then the gas was switched to oxygen, and the temperature was raised again to 900°C. The weight loss in this step was assigned to carbon black (Wcb). Knowing the content of carbon black and chalk, the ash content excluding chalk and carbon black was calculated as:

$$\text{Ash content} = (\text{Ash residue}) - 56/44 \times \text{WCO2} - \text{Wcb}$$

Where Ash residue is the weight% measured at 900°C in the first step conducted under nitrogen. The ash content is estimated to be the same as the talc content for the investigated recyclates.

**g) MFR**

Melt flow rates were measured with a load of 2.16 kg (MFR$_2$) at 230 °C (for polypropylene) and at 190°C (for polyethylene). The melt flow rate is that quantity of polymer in grams which the test apparatus standardized to ISO 1133 extrudes within 10 minutes at a temperature of 230 °C respectively 190 °C under a load of 2.16 kg.

**h) Melting temperature**

Melting temperature was measured using DSC according to ISO 11357-3 using a temperature gradient of 10°C/min.

**i) Amount of Metals**

was determined by x ray fluorescence (XRF)

**j) Amount of Paper, Wood**

Paper and wood were determined by conventional laboratory methods including milling, floatation, microscopy and Thermogravimetric Analysis (TGA).

**k) Limonene Measurement**

Limonene quantification was carried out using solid phase microextraction (HS-SPME-GC-MS) by standard addition.

50 mg ground samples were weighed into 20 mL headspace vials and after the addition of limonene in different concentrations and a glass-coated magnetic stir bar the vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1mg/kg and 5 mg/kg limonene, in addition standard amounts of 6.6 mg/kg, 11 mg/kg and 16.5 mg/kg limonene were used in combination with some of the samples tested in this application. For quantification, ion-93 acquired in SIM mode was used. Enrichment of the volatile fraction was carried out by headspace solid phase microextraction with a 2 cm stable flex 50/30 pm DVB/Carboxen/PDMS fibre at 60°C for 20 minutes. Desorption was carried out directly in the heated injection port of a GCMS system at 270°C.

GCMS Parameters:

Column: 30 m HP 5 MS 0.25*0.25
Injector: Splitless with 0.75 mm SPME Liner, 270°C
Temperature program: -10°C ( 1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

**l) Total free fatty acid content**

Fatty acid quantification was carried out using headspace solid phase micro-extraction (HS-SPME-GC-MS) by standard addition.

50 mg ground samples were weighed in 20 mL headspace vial and after the addition of limonene in different concentrations and a glass coated magnetic stir bar the vial was closed with a magnetic cap lined with silicone/PTFE. 10 $\mu$L Micro-capillaries were used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode was used for all acids except propanoic acid, here ion 74 was used.

GCMS Parameter:

Column: 20 m ZB Wax plus 0.25*0.25
Injector: Split 5:1 with glass lined split liner, 250°C
Temperature program: 40°C ( 1 min) @6°C/min to 120°C, @15°C to 245 °C (5 min) Carrier: Helium 5.0, 40 cm/s linear velocity, constant flow
MS: Single quadrupole, direct interface, 220°C inter face temperature
Acquisition: SIM scan mode
Scan parameter: 46-250 amu 6.6 scans/s
SIM Parameter: m/z 60,74, 6.6 scans/s

**Experiments**

A conventional random polypropylene copolymer (propylene ethylene copolymer) having a melt flow rate of 0.25 g/10min (ISO 1133, 230°C, 2.16 kg), tensile modulus of 1006 MPa (ISO 527-2), a Charpy Impact strength of 13 kJ/m² (ISO 179-1) and an ethylene content of 4.5 wt.-% as commercially available was used as component (C). A $C_2C_8$ plastomer (Queo 6201 as commercially available from Borealis) having a melt flow rate of 1.0 g/10min (ISO 1133, 190°C, 2.16 kg), melting temperature of 49°C, and tensile modulus of 4 MPa was used as component (B).

For blend (A) an experimental grade originating from household trash having a melt flow rate of 13.2 g/10min was used.

Table 1 shows the properties of the polypropylene / polyethylene blends (A) as used for the evaluation.

**Table 1: Properties of Polypropylene / Polyethylene Blends Mixtures (Blend A)**

| | Blend A |
|---|---|
| PP / PE ratio | 14 : 1 |
| Recycling origin | yes |
| limonene | > 0.1 ppm |
| MFR$_2$ (230°C, ISO1133), g/10min | 13.2 |
| Tensile modulus, ISO 527-2, MPa | 1164 |
| Charpy NIS + 23 °C ISO 179 1eA, kJ/m² | 6.0 |
| Charpy NIS -20 °C ISO 179 1eA, kJ/m² | 2.1 |
| Charpy NIS 0 °C ISO 179 1eA, kJ/m² | 3.6 |

The compositions were compounded in a co-rotating twin-screw extruder Coperion ZSK 47 at 220°C with 0.15 wt.-% antioxidant (Irganox B215FF from BASF AG, Germany; this is a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4)..

Table 2: Experimental results

| | | CE1 | CE2 | CE3 | **CE4** | **CE5** | CE6 | **IE1** | IE2 | IE3 | IE4 | IE5 | IE6 | IE7 | **IE8** | IE9 |
|---|---|---|---|---|---|---|---|---|---|---|---|---|---|---|---|---|
| Blend (A) | wt.% | 100 | | 85 | **80** | **70** | | **80** | 75 | 65 | 80 | 75 | 70 | 75 | **70** | 60 |
| component (B) C2C8 plastomer | wt.-% | | | 15 | **20** | **30** | 100 | **15** | 20 | 30 | 15 | 20 | 30 | 15 | **20** | 30 |
| component (C) random polypropylene copolymer | wt.-% | | 100 | 0 | **0** | **0** | | **5** | 5 | 5 | 5 | 5 | 5 | 10 | **10** | 10 |
| MFR2 | g/10 min | 13.2 | 0.25 | 13.3 | **13.2** | **11.6** | 1.0 | **10.2** | 9.5 | 8.4 | 10.6 | 8.4 | 8.4 | 7.8 | **6.7** | 6.3 |
| density | kg/m$^3$ | | | | | | 862 | | | | | | | | | |
| Tm | °C | | | | | | 49 | | | | | | | | | |
| tensile modulus | MPa | 1164 | 1006 | 927 | **841** | **685** | 4* | **899** | 814 | 669 | 924 | 842 | 682 | 897 | **831** | 628 |
| impact strength (23°C. 1eA) | kJ/m 2 | 6.0 | 13 | 13 | **28** | **51** | | **15** | 33 | 49 | 14 | 33 | 52 | 21 | **36** | 61 |
| impact strength (0 °C. 1eA) | kJ/m 2 | 3.6 | 4.4 | 6.1 | **7.4** | **39** | | **6.4** | 7.3 | 37 | 5.9 | 7.3 | 39 | 6.0 | **7.4** | 47 |
| impact strength (-20 °C. 1eA) | kJ/m 2 | 2.1 | 2.0 | 4.0 | **4.7** | **8.5** | | **3.8** | 4.0 | 7.0 | 3.8 | 4.9 | 7.5 | 3.6 | **3.9** | 8.7 |
| *ASTM D638-T4 | | | | | | | | | | | | | | | | |

It can be seen that the losses as to stiffness by adding the $C_2C_8$ plastomer having an extremely low tensile modulus are surprisingly marginal. However, component (C), i.e. the random polypropylene copolymer resulted in a surprising boosting effect with respect to the impact properties.

When CE4 having a total of 20 wt.-% of virgin material and having an impact strength of 28 kJ/m$^2$ at a tensile modulus of 841 MPa is compared with IE1 (also a total of 20 wt.-% virgin material and) having an impact strength of 15 kJ/m$^2$ at a tensile modulus of 899 MPa, it can be seen that the stiffness is improved at only marginal deterioration as to impact well within the acceptable range. Moreover, the low temperature impact strength data showed rather small differences. Thus, the present invention allows to avoid undesirable low stiffness at still reasonable impact properties. This is confirmed when comparing CE5 (30 wt.-% virgin material) with IE8 (also 30 wt.-% virgin material): the stiffness of IE8 was by far better.

It is also visible that the addition of component (B) in higher amounts allows increasing of the impact properties far beyond what is actually required for conventional uses going hand in hand with not so good stiffness.

## Claims

1. A polyethylene-polypropylene composition having a melt flow rate of 5.0 to 12.0 g/10min (ISO1133, 230°C, 2.16kg) obtainable by blending

   a) 52 to 92 wt.-%, preferably 65 to 91 wt.-%, more preferably 70 to 90 wt.-% and most preferably 71 to 89 wt.-%, based on the total weight of the polyethylene-polypropylene composition, of a blend (A) comprising

   A-1) polypropylene and
   A-2) polyethylene,
   wherein the weight ratio of polypropylene to polyethylene is from 19:1 to 7:3, and
   wherein blend (A) is a recycled material, which is recovered from a waste plastic material derived from post-consumer and/or industrial waste;
   and

   b) 5 to 35 wt.-%, preferably 5 to 22 wt.-%, more preferably 6 to 18 wt.-%, most preferably 7 to 17 wt.-%, based on the total weight of the polyethylene-polypropylene composition of a compatibilizer (B) selected from the group of $C_2C_4$ plastomers, $C_2C_6$ plastomers, $C_2C_8$ plastomers and mixtures thereof, having

   - a DSC melting point of below 75 °C (ISO11357);
   - an MFR$_2$ (ISO1133, 2.16 kg load at 190 °C) of equal or below 1.5 g/10 min, preferably equal or below 1.0 g/10min, most preferably 0.1 to 0.5 g/10 min; and
   - a density of equal or lower than 885 kg/m$^3$ (ISO1183),
   and

   c) 3 to 12 wt.-%, preferably 4 to 12 wt.-%, and most preferably 4 to 11 wt.-%, based on the total weight of the polyethylene-polypropylene composition of a random polypropylene copolymer having an MFR$_2$ (ISO1133, 2.16 kg load at 230 °C) of equal or below 1.0 g/10 min; and
   d) 0 to 1.0 wt.-%, based on the total weight of the polyethylene-polypropylene composition of a stabilizer or a mixture of stabilizers,
   whereby the polyethylene-polypropylene composition has a tensile modulus of at least 600 MPa (ISO 527-2).

2. The polyethylene-polypropylene composition according to claim 1 having a tensile modulus of at least 700 MPa (ISO 527-2).

3. The polyethylene-polypropylene composition according to claim 1 having a tensile modulus of at least 800 MPa (ISO 527-2).

4. The polyethylene-polypropylene composition according to claim 1 having a tensile modulus of 850 to 1000 MPa (ISO 527-2).

5. The polyethylene-polypropylene composition having a melt flow rate of 5.0 to 12.0 g/10min (ISO1133, 230°C, 2.16kg) according to claim 1,

obtainable by blending

a) 71 to 89 wt.-%, based on the total weight of the polyethylene-polypropylene composition, of the blend (A) comprising

A-1) polypropylene and
A-2) polyethylene,

wherein the weight ratio of polypropylene to polyethylene is from 19:1 to 7:3, and
wherein blend (A) is a recycled material, which is recovered from a waste plastic material derived from post-consumer and/or industrial waste;
and

b) 7 to 17 wt.-%, based on the total weight of the polyethylene-polypropylene composition of a compatibilizer (B) selected from the group of C2C4 plastomers, C2C6 plastomers, $C_2C_8$ plastomers and mixtures thereof, having

- a DSC melting point of below 75 °C (ISO11357);
- an $MFR_2$ (ISO1133, 2.16 kg load at 190 °C) of equal or below 1.5 g/10 min, preferably equal or below 1.0 g/10min, most preferably 0.1 to 0.5 g/10 min; and
- a density of equal or lower than 885 kg/m$^3$ (ISO1183),
and

c) 4 to 11 wt.-%, based on the total weight of the polyethylene-polypropylene composition of a random polypropylene copolymer having an $MFR_2$ (ISO1133, 2.16 kg load at 230 °C) of equal or below 1.0 g/10 min; and
d) 0 to 1.0 wt.-%, based on the total weight of the polyethylene-polypropylene composition of a stabilizer or mixture of stabilizers,
whereby the polyethylene-polypropylene composition has a tensile modulus of 850 to 1000 MPa.

6. The polyethylene-polypropylene composition according to claim 1 having a melt flow rate of 5.0 to 12.0 g/10min (ISO1133, 230°C, 2.16kg) obtainable by blending

a) 71 to 89 wt.-%, based on the total weight of the polyethylene-polypropylene composition of a blend (A) comprising

A-1) polypropylene and
A-2) polyethylene,

wherein the weight ratio of polypropylene to polyethylene is from 19:1 to 7:3, and
wherein blend (A) is a recycled material, which is recovered from a waste plastic material derived from post-consumer and/or industrial waste;
and

b) 7 to 17 wt.-%, based on the total weight of the polyethylene-polypropylene composition of a compatibilizer (B) being a $C_2C_8$ plastomer,
having

- a DSC melting point of below 75 °C (ISO11357);
- an $MFR_2$ (ISO1133, 2.16 kg load at 190 °C) of equal or below 1.5 g/10 min, preferably equal or below 1.0 g/10min, most preferably 0.1 to 0.5 g/10 min ; and
- a density of equal or lower than 885 kg/m$^3$ (ISO1183),
and

c) 4 to 11 wt.-%, based on the total weight of the polyethylene-polypropylene composition of a random polypropylene copolymer having an $MFR_2$ (ISO1133, 2.16 kg load at 230 °C) of equal or below 1.0 g/10 min; and
d) 0 to 1.0 wt.-%, based on the total weight of the polyethylene-polypropylene composition of a stabilizer or mixture of stabilizers,
whereby the polyethylene-polypropylene composition has a tensile modulus of 850 to 1000 MPa.

7. The polyethylene-polypropylene composition according to any one of the preceding claims, wherein the compatibilizer (B) has a DSC melting point of equal or below 73 °C, preferably below 60 °C (ISO11357), most preferably in the range of 38°C to below 60°C (DSC, ISO 11357-3 temperature gradient 10°C/min).

8. The polyethylene-polypropylene composition according to any one of the preceding claims, wherein the compatibilizer (B) has a density of equal or lower than 875 kg/m$^3$ (ISO1183), preferably 858 to 867 kg/m$^3$.

9. The polyethylene-polypropylene composition according to any of the preceding claims, whereby blend (A) has one or more of the following:

(i) a content of limonene as determined by using solid phase microextraction (HS-SPME-GC-MS) of from 0.1 ppm to 100 ppm, preferably from 0.1 ppm to 50 ppm, more preferably from 0.1 ppm to 10 ppm,
(ii) a content of polystyrene of up to 6.0 wt.-%;
(iii) a content of talc of up to 3 wt.-%;
(iv) a content of polyamide(s) of up to 5.0 wt.-%;
(v) a content of chalk of up to 1.0 wt.-%;
(vi) a content of fatty acids as determined by using solid phase microextraction (HS-SPME-GC-MS) of 0.1 to 100 ppm.

10. The polyethylene-polypropylene composition according to any of the preceding claims, whereby the random polypropylene copolymer has an ethylene content of 3.0 to 6.0 wt.-%, and whereby preferably the random polypropylene copolymer contains units derived from propylene and ethylene only.

11. The polyethylene-polypropylene composition according to any of the preceding claims, whereby the amounts of component a) to d) add up to 100 wt.-%.

12. An article comprising, preferably consisting of the polyethylene-polypropylene composition according to any of claims 1 to 11.

13. A process for providing a polyethylene-polypropylene composition according to any one of claims 1 to 11, the process comprising the steps of:

a) providing blend (A) comprising polypropylene and polyethylene in a ratio of 19:1 to 7:3 in an amount of 52 to 92 wt.-%, preferably 65 to 91 wt.-%, more preferably 70 to 90 wt.-% and most preferably 71 to 89 wt.-% based on the total weight of the polyethylene-polypropylene composition,
wherein blend (A) is a recycled material, which is recovered from a waste plastic material derived from post-consumer and/or industrial waste;
b) providing a compatibilizer (B) in an amount from 5 to 35 wt.-%, preferably 5 to 22 wt.-%, more preferably 6 to 18 wt.-% and most preferably 7 to 17 wt.-% based on the total weight of the polyethylene-polypropylene composition, whereby compatibilizer (B) is selected from the group of $C_2C_4$ plastomers, $C_2C_6$ plastomers or $C_2C_8$ plastomers, the compatibilizer (B) having

- a DSC melting point of below 75 °C, preferably equal or below 73 °C, more preferably below 60 °C and most preferably in the range of 38 °C to 60°C(ISO11357); and
- an MFR$_2$ (ISO1133, 2.16 kg load at 190 °C) of equal or below 1.5 g/10 min, preferably equal or below 1.0 g/10min, most preferably 0.1 to 0.5 g/10 min ; and
- a density of equal or lower than 885 kg/m$^3$, preferably a density of equal or lower than 875 kg/m$^3$, most preferably 858 to 867 kg/ m$^3$ (ISO1183);

c) providing a random polypropylene copolymer having an MFR$_2$ (ISO1133, 2.16 kg load at 230 °C) of equal or below 1.0 g/10 min in an amount of 3 to 12 wt.-%, preferably 4 to 12 wt.-%, and most preferably 4 to 11 wt.-% with respect to the total weight of the polyethylene-polypropylene composition;
d) melting and mixing the blend in the presence of 0 to 1.0 wt.-% of a stabilizer or a mixture of stabilizers with respect to the total weight of the polyethylene-polypropylene composition, and
e) optionally pelletizing.

14. Use of a compatibilizer (B) together with a random polypropylene copolymer (C) for obtaining a Charpy notched impact strength (1eA) (non-instrumented, ISO 179-1 at +23 °C) of at least 14 kJ/m$^2$ and simultaneously a tensile modulus in MPa (ISO 527-2) of at least 850 to 1000 MPa, whereby the compatibilizer (B) is a $C_2C_8$ plastomer, having

- a DSC melting point of below 75 °C, preferably equal or below 73 °C, more preferably below 60 °C and most preferably in the range of 38 °C to 60°C(ISO11357);
- an $MFR_2$ (ISO1133, 2.16 kg load at 190 °C) of equal or below 1.5 g/10 min, preferably equal or below 1.0 g/10min, most preferably 0.1 to 0.5 g/10 min ; and
- a density of equal or lower than 885 kg/m$^3$, preferably a density of equal or lower than 875 kg/m$^3$, most preferably 858 to 867 kg/ m$^3$ (ISO1183), and whereby

the random polypropylene copolymer has an $MFR_2$ (ISO1133, 2.16 kg load at 230 °C) of equal or below 1.0 g/10 min together with a blend (A) comprising

A-1) polypropylene and
A-2) polyethylene,

wherein the weight ratio of polypropylene to polyethylene is from 19:1 to 7:3, and
wherein blend (A) is a recycled material, which is recovered from a waste plastic material derived from post-consumer and/or industrial waste; and
wherein blend (A) is present in an amount of
52 to 92 wt.-%, preferably 65 to 91 wt.-%, more preferably 70 to 90 wt.-% and
most preferably 71 to 89 wt.-% with respect to the final polyethylene-polypropylene composition, and
wherein compatibilizer (B) is present in an amount of 5 to 35 wt.-%, preferably 5 to 22 wt.-%, more preferably 6 to 18 wt.-%, most preferably 7 to 17 wt.-% with respect to the final polyethylene-polypropylene composition, and
wherein
the random polypropylene copolymer having an $MFR_2$ (ISO1133, 2.16 kg load at 230 °C) of equal or below 1.0 g/10 min is present in an amount of
3 to 12 wt.-%, preferably 4 to 12 wt.-%, and most preferably 4 to 11 wt.-% with respect to the final polyethylene-polypropylene composition.

**Patentansprüche**

1. Polyethylen-Polypropylen-Zusammensetzung mit einer Schmelzflussrate von 5,0 bis 12,0 g/10min (ISO1133, 230°C, 2,16 kg), erhältlich durch Mischen von

a) 52 bis 92 Gew.-%, vorzugsweise 65 bis 91 Gew.-%, noch bevorzugter 70 bis 90 Gew.-% und am meisten bevorzugt 71 bis 89 Gew.-%, bezogen auf das Gesamtgewicht der Polyethylen-Polypropylen-Zusammensetzung, einer Mischung (A), umfassend

A-1) Polypropylen und
A-2) Polyethylen,

wobei das Gewichtsverhältnis von Polypropylen zu Polyethylen zwischen 19:1 und 7:3 liegt,
wobei es sich bei der Mischung (A) um ein recyceltes Material handelt, das aus einem Kunststoffabfallmaterial gewonnen wird, das aus Post-Verbraucher- und/oder Industrieabfällen stammt; und

b) 5 bis 35 Gew.-%, vorzugsweise 5 bis 22 Gew.-%, noch bevorzugter 6 bis 18 Gew.-%, am meisten bevorzugt 7 bis 17 Gew.-%, bezogen auf das Gesamtgewicht der Polyethylen-Polypropylen-Zusammensetzung, eines Kompatibilisators (B), ausgewählt aus der Gruppe der C2C4-Plastomere, C2C6-Plastomere, C2C8-Plastomere und Mischungen davon,
mit

- einem DSC-Schmelzpunkt von unter 75 °C (ISO11357);
- einer $MFR_2$ (ISO1133, 2,16 kg Last bei 190 °C) von gleich oder weniger als 1,5 g/10 min, vorzugsweise gleich oder weniger als 1,0 g/10 min, besonders bevorzugt 0,1 bis 0,5 g/10 min; und
- einer Dichte von 885 kg/m$^3$ oder weniger (ISO1183),
und

c) 3 bis 12 Gew.-%, vorzugsweise 4 bis 12 Gew.-% und am meisten bevorzugt 4 bis 11 Gew.-%, bezogen auf das Gesamtgewicht der Polyethylen-Polypropylen-Zusammensetzung, eines statistischen Polypropylen-Copolymers mit einer $MFR_2$ (ISO1133, 2,16 kg Last bei 230 °C) von gleich oder weniger als 1,0 g/10 min; und
d) 0 bis 1,0 Gew.-%, bezogen auf das Gesamtgewicht der Polyethylen-Polypropylen-Zusammensetzung, eines Stabilisators oder einer Mischung von Stabilisatoren,
wobei die Polyethylen-Polypropylen-Zusammensetzung ein Zugmodul von mindestens 600 MPa (ISO 527-2) aufweist.

2. Polyethylen-Polypropylen-Zusammensetzung nach Anspruch 1 mit einem Zugmodul von mindestens 700 MPa (ISO 527-2).

3. Polyethylen-Polypropylen-Zusammensetzung nach Anspruch 1 mit einem Zugmodul von mindestens 800 MPa (ISO 527-2).

4. Polyethylen-Polypropylen-Zusammensetzung nach Anspruch 1 mit einem Zugmodul von 850 bis 1000 MPa (ISO 527-2).

5. Polyethylen-Polypropylen-Zusammensetzung nach Anspruch 1 mit einer Schmelzflussrate von 5,0 bis 12,0 g/10min (ISO1133, 230°C, 2,16 kg), erhältlich durch Mischen von

    a) 71 bis 89 Gew.-%, bezogen auf das Gesamtgewicht der Polyethylen-Polypropylen-Zusammensetzung, der Mischung (A), umfassend

        A-1) Polypropylen und
        A-2) Polyethylen,

            wobei das Gewichtsverhältnis von Polypropylen zu Polyethylen zwischen 19:1 und 7:3 liegt,
            wobei es sich bei der Mischung (A) um ein recyceltes Material handelt, das aus einem Kunststoffabfallmaterial gewonnen wird, das aus Post-Verbraucher- und/oder Industrieabfällen stammt; und

    b) 7 bis 17 Gew.-%, bezogen auf das Gesamtgewicht der Polyethylen-Polypropylen-Zusammensetzung, eines Kompatibilisators (B), ausgewählt aus der Gruppe der C2C4-Plastomere, C2C6-Plastomere, C2C8-Plastomere und Mischungen davon,
    mit

        - einem DSC-Schmelzpunkt von unter 75 °C (ISO11357);
        - einer $MFR_2$ (ISO1133, 2,16 kg Last bei 190 °C) von gleich oder weniger als 1,5 g/10 min, vorzugsweise gleich oder weniger als 1,0 g/10 min, besonders bevorzugt 0,1 bis 0,5 g/10 min; und
        - einer Dichte von 885 kg/m$^3$ oder weniger (ISO1183), und

    c) 4 bis 11 Gew.-%, bezogen auf das Gesamtgewicht der Polyethylen-Polypropylen-Zusammensetzung, eines statistischen Polypropylen-Copolymers mit einer $MFR_2$ (ISO1133, 2,16 kg Last bei 230 °C) von gleich oder weniger als 1,0 g/10 min; und
    d) 0 bis 1,0 Gew.-%, bezogen auf das Gesamtgewicht der Polyethylen-Polypropylen-Zusammensetzung, eines Stabilisators oder einer Mischung von Stabilisatoren,
    wobei die Polyethylen-Polypropylen-Zusammensetzung ein Zugmodul von 850 bis 1000 MPa aufweist.

6. Polyethylen-Polypropylen-Zusammensetzung nach Anspruch 1 mit einer Schmelzflussrate von 5,0 bis 12,0 g/10min (ISO1133, 230°C, 2,16 kg), erhältlich durch Mischen von

    a) 71 bis 89 Gew.-%, bezogen auf das Gesamtgewicht der Polyethylen-Polypropylen-Zusammensetzung, einer Mischung (A), umfassend

        A-1) Polypropylen und
        A-2) Polyethylen,

            wobei das Gewichtsverhältnis von Polypropylen zu Polyethylen zwischen 19:1 und 7:3 liegt,
            wobei es sich bei der Mischung (A) um ein recyceltes Material handelt, das aus einem Kunststoffabfallmaterial gewonnen wird, das aus Post-Verbraucher- und/oder Industrieabfällen stammt; und

b) 7 bis 17 Gew.-%, bezogen auf das Gesamtgewicht der Polyethylen-Polypropylen-Zusammensetzung, eines Kompatibilisators (B), der ein C2C8-Plastomer ist, mit

- einem DSC-Schmelzpunkt von unter 75 °C (ISO11357);
- einer $MFR_2$ (ISO1133, 2,16 kg Last bei 190 °C) von gleich oder weniger als 1,5 g/10 min, vorzugsweise gleich oder weniger als 1,0 g/10 min, besonders bevorzugt 0,1 bis 0,5 g/10 min; und
- einer Dichte von 885 kg/m³ oder weniger (ISO1183), und

c) 4 bis 11 Gew.-%, bezogen auf das Gesamtgewicht der Polyethylen-Polypropylen-Zusammensetzung, eines statistischen Polypropylen-Copolymers mit einer $MFR_2$ (ISO1133, 2,16 kg Last bei 230 °C) von gleich oder weniger als 1,0 g/10 min; und
d) 0 bis 1,0 Gew.-%, bezogen auf das Gesamtgewicht der Polyethylen-Polypropylen-Zusammensetzung, eines Stabilisators oder einer Mischung von Stabilisatoren,
wobei die Polyethylen-Polypropylen-Zusammensetzung ein Zugmodul von 850 bis 1000 MPa aufweist.

7. Polyethylen-Polypropylen-Zusammensetzung nach einem der vorhergehenden Ansprüche, wobei der Kompatibilisator (B) einen DSC-Schmelzpunkt von gleich oder unter 73 °C, vorzugsweise unter 60 °C (ISO 11357), am meisten bevorzugt im Bereich von 38 °C bis unter 60 °C (DSC, ISO 11357-3 Temperaturgradient 10 °C/min) aufweist.

8. Polyethylen-Polypropylen-Zusammensetzung nach einem der vorhergehenden Ansprüche, wobei der Kompatibilisator (B) eine Dichte von gleich oder weniger als 875 kg/m³ (ISO1183), vorzugsweise 858 bis 867 kg/m³, aufweist.

9. Polyethylen-Polypropylen-Zusammensetzung nach einem der vorhergehenden Ansprüche, wobei die Mischung (A) eine oder mehrere der folgenden Eigenschaften aufweist:

(i) einen Gehalt an Limonen, bestimmt durch Festphasenmikroextraktion (HS-SPME-GC-MS), von 0,1 ppm bis 100 ppm, vorzugsweise von 0,1 ppm bis 50 ppm, noch bevorzugter von 0,1 ppm bis 10 ppm,
(ii) einen Gehalt an Polystyrol von bis zu 6,0 Gew.-%;
(iii) einen Talkgehalt von bis zu 3 Gew.-%;
(iv) einen Gehalt an Polyamid(en) von bis zu 5,0 Gew.-%
(v) einen Gehalt an Kreide von bis zu 1,0 Gew.-%;
(vi) einen mittels Festphasenmikroextraktion (HS-SPME-GC-MS) bestimmten Gehalt an Fettsäuren von 0,1 bis 100 ppm.

10. Polyethylen-Polypropylen-Zusammensetzung nach einem der vorhergehenden Ansprüche, wobei das statistische Polypropylen-Copolymer einen Ethylengehalt von 3,0 bis 6,0 Gew.-% aufweist, und wobei das statistische Polypropylen-Copolymer vorzugsweise nur von Propylen und Ethylen abgeleitete Einheiten enthält.

11. Polyethylen-Polypropylen-Zusammensetzung nach einem der vorhergehenden Ansprüche, wobei sich die Mengen der Komponenten a) bis d) auf 100 Gew.-% addieren.

12. Gegenstand, umfassend, vorzugsweise bestehend aus der Polyethylen-Polypropylen-Zusammensetzung nach einem der Ansprüche 1 bis 11.

13. Verfahren zur Herstellung einer Polyethylen-Polypropylen-Zusammensetzung nach einem der Ansprüche 1 bis 11, wobei das Verfahren die folgenden Schritte umfasst:

a) Bereitstellen einer Mischung (A), die Polypropylen und Polyethylen in einem Verhältnis von 19:1 bis 7:3 in einer Menge von 52 bis 92 Gew.-%, vorzugsweise 65 bis 91 Gew.-%, noch bevorzugter 70 bis 90 Gew.-% und am meisten bevorzugt 71 bis 89 Gew.-%, bezogen auf das Gesamtgewicht der Polyethylen-Polypropylen-Zusammensetzung, umfasst,
wobei es sich bei der Mischung (A) um ein recyceltes Material handelt, das aus einem Kunststoffabfallmaterial gewonnen wird, das aus Post-Consumer- und/oder Industrieabfällen stammt;
b) Bereitstellen eines Kompatibilisators (B) in einer Menge von 5 bis 35 Gew.-%, vorzugsweise 5 bis 22 Gew.-%,

bevorzugter 6 bis 18 Gew.-% und am meisten bevorzugt 7 bis 17 Gew.-%, bezogen auf das Gesamtgewicht der Polyethylen-Polypropylen-Zusammensetzung, wobei der Kompatibilisator (B) ausgewählt ist aus der Gruppe der C2C4-Plastomere, C2C6-Plastomere oder C2C8-Plastomere, wobei der Kompatibilisator (B)

- einen DSC-Schmelzpunkt von unter 75 °C, vorzugsweise gleich oder unter 73 °C, noch bevorzugter unter 60 °C und am meisten bevorzugt im Bereich von 38 °C bis 60°C (ISO11357); und
- eine $MFR_{(2)}$ (ISO1133, 2,16 kg Last bei 190 °C) von gleich oder weniger als 1,5 g/10 min, vorzugsweise gleich oder weniger als 1,0 g/10 min, besonders bevorzugt 0,1 bis 0,5 g/10 min; und
- eine Dichte von 885 kg/m$^3$ oder weniger, vorzugsweise eine Dichte von 875 kg/m$^3$ oder weniger, besonders bevorzugt 858 bis 867 kg/m$^3$ (ISO1183) aufweist,

c) Bereitstellen eines statistischen Polypropylen-Copolymers mit einem $MFR_{(2)}$ (ISO1133, 2,16 kg Last bei 230 °C) von gleich oder unter 1,0 g/10 min in einer Menge von 3 bis 12 Gew.-%, vorzugsweise 4 bis 12 Gew.-% und am meisten bevorzugt 4 bis 11 Gew.-%, bezogen auf das Gesamtgewicht der Polyethylen-Polypropylen-Zusammensetzung,
d) Schmelzen und Mischen der Mischung in Gegenwart von 0 bis 1,0 Gew.-% eines Stabilisators oder einer Mischung von Stabilisatoren, bezogen auf das Gesamtgewicht der Polyethylen-Polypropylen-Zusammensetzung, und
e) gegebenenfalls Pelletierung.

14. Verwendung eines Kompatibilisators (B) zusammen mit einem statistischen Polypropylen-Copolymer (C)

zur Erzielung einer Charpy-Kerbschlagzähigkeit (1eA) (nicht instrumentiert, ISO 179-1 bei +23 °C) von mindestens 14 kJ/m$^2$ und gleichzeitig eines Zugmoduls in MPa (ISO 527-2) von mindestens 850 bis 1000 MPa, wobei der Kompatibilisator (B) ein C2C8-Plastomer ist, mit

- einem DSC-Schmelzpunkt von unter 75 °C, vorzugsweise gleich oder unter 73 °C, noch bevorzugter unter 60 °C und am meisten bevorzugt im Bereich von 38 °C bis 60°C (ISO11357);
- einer $MFR_{(2)}$ (ISO1133, 2,16 kg Last bei 190 °C) von gleich oder weniger als 1,5 g/10 min, vorzugsweise gleich oder weniger als 1,0 g/10 min, besonders bevorzugt 0,1 bis 0,5 g/10 min; und
- einer Dichte von gleich oder weniger als 885 kg/m$^3$, vorzugsweise einer Dichte von gleich oder weniger als 875 kg/m$^3$, am meisten bevorzugt 858 bis 867 kg/ m$^3$ (ISO1183), und wobei

das statistische Polypropylen-Copolymer eine $MFR_2$ (ISO1133, 2,16 kg Last bei 230 °C) von gleich oder weniger als 1,0 g/10 min aufweist, zusammen mit einer Mischung (A), umfassend

A-1) Polypropylen und
A-2) Polyethylen,

wobei das Gewichtsverhältnis von Polypropylen zu Polyethylen zwischen 19:1 und 7:3 liegt, wobei es sich bei der Mischung (A) um ein recyceltes Material handelt, das aus einem Kunststoffabfallmaterial gewonnen wird, das aus Post-Verbraucher- und/oder Industrieabfällen stammt; und wobei die Mischung (A) in einer Menge vorhanden ist, die 52 bis 92 Gew.-%, vorzugsweise 65 bis 91 Gew.-%, besonders bevorzugt 70 bis 90 Gew.-% und am meisten bevorzugt 71 bis 89 Gew.-%, bezogen auf die endgültige Polyethylen-Polypropylen-Zusammensetzung beträgt, und wobei der Kompatibilisator (B) in einer Menge von 5 bis 35 Gew.-%, vorzugsweise 5 bis 22 Gew.-%, noch bevorzugter 6 bis 18 Gew.-%, am meisten bevorzugt 7 bis 17 Gew.-% vorhanden ist, in Bezug auf die endgültige Polyethylen-Polypropylen-Zusammensetzung, und wobei das statistische Polypropylen-Copolymer mit einer $MFR_2$ (ISO1133, 2,16 kg Last bei 230 °C) von gleich oder weniger als 1,0 g/10 min in einer Menge von 3 bis 12 Gew.-%, vorzugsweise 4 bis 12 Gew.-% und am meisten bevorzugt 4 bis 11 Gew.-%, bezogen auf die endgültige Polyethylen-Polypropylen-Zusammensetzung vorhanden ist.

**Revendications**

1. Composition de polyéthylène-polypropylène présentant un indice de fluidité à chaud de 5,0 à 12,0 g/10 min (ISO1133, 230 °C, 2,16 kg) pouvant être obtenue en mélangeant

   a) 52 à 92 % en poids, de préférence 65 à 91 % en poids, de manière davantage préférée 70 à 90 % en poids, et de manière préférée entre toutes 71 à 89 % en poids, sur la base du poids total de la composition de polyéthylène-polypropylène, d'un mélange (A) comprenant

   A-1) un polypropylène et
   A-2) un polyéthylène,
   dans laquelle le rapport pondéral polypropylène sur polyéthylène est de 19:1 à 7:3, et dans laquelle le mélange (A) est un matériau recyclé, qui est récupéré à partir de déchets plastiques dérivés de déchets post-consommation et/ou industriels ;
   et

   b) 5 à 35 % en poids, de préférence 5 à 22 % en poids, de manière davantage préférée 6 à 18 % en poids, de manière préférée entre toutes 7 à 17 % en poids, sur la base du poids total de la composition de polyéthylène-polypropylène, d'un agent compatibilisant (B) sélectionné dans le groupe des plastomères en $C_2C_4$, des plastomères en $C_2C_6$, des plastomères en $C_2C_8$ et des mélanges de ceux-ci, présentant

   - un point de fusion par DSC inférieur à 75 °C (ISO11357) ;
   - un $MFR_2$ (ISO1133, charge de 2,16 kg à 190 °C) inférieur ou égal à 1,5 g/1,0 min, de préférence inférieur ou égal à 1,0 g/10 min, de manière préférée entre toutes de 0,1 à 0,5 g/10 min ; et
   - une masse volumique inférieure ou égale à 885 kg/m$^3$ (ISO1183),
   et

   c) 3 à 12 % en poids, de préférence 4 à 12 % en poids, et de manière préférée entre toutes 4 à 11 % en poids, sur la base du poids total de la composition de polyéthylène-polypropylène d'un copolymère statistique de polypropylène présentant un $MFR_2$ (ISO1133, charge de 2,16 kg à 230 °C) inférieur ou égal à 1,0 g/10 min ; et
   d) 0 à 1,0 % en poids, sur la base du poids total de la composition de polyéthylène-polypropylène, d'un stabilisant ou d'un mélange de stabilisants,
   moyennant quoi la composition de polyéthylène-polypropylène présente un module de traction d'au moins 600 MPa (ISO 527-2).

2. Composition de polyéthylène-polypropylène selon la revendication 1 présentant un module de traction d'au moins 700 MPa (ISO 527-2).

3. Composition de polyéthylène-polypropylène selon la revendication 1 présentant un module de traction d'au moins 800 MPa (ISO 527-2).

4. Composition de polyéthylène-polypropylène selon la revendication 1 présentant un module de traction de 850 à 1000 MPa (ISO 527-2).

5. Composition de polyéthylène-polypropylène présentant un indice de fluidité à chaud de 5,0 à 12,0 g/10 min (ISO1133, 230 °C, 2,16 kg) selon la revendication 1,
   pouvant être obtenue en mélangeant

   a) 71 à 89 % en poids, sur la base du poids total de la composition de polyéthylène-polypropylène, du mélange (A) comprenant

   A-1) un polypropylène et
   A-2) un polyéthylène,

   dans laquelle le rapport pondéral polypropylène sur polyéthylène est de 19:1 à 7:3, et dans laquelle le mélange (A) est un matériau recyclé, qui est récupéré à partir de déchets plastiques dérivés de déchets post-consommation et/ou industriels ;
   et

b) 7 à 17 % en poids, sur la base du poids total de la composition de polyéthylène-polypropylène, d'un agent compatibilisant (B) sélectionné dans le groupe des plastomères en $C_2C_4$, des plastomères en $C_2C_6$, des plastomères en $C_2C_8$ et des mélanges de ceux-ci, présentant

- un point de fusion par DSC inférieur à 75 °C (ISO11357) ;
- un $MFR_2$ (ISO1133, charge de 2,16 kg à 190 °C) inférieur ou égal à 1,5 g/1,0 min, de préférence inférieur ou égal à 1,0 g/10 min, de manière préférée entre toutes de 0,1 à 0,5 g/10 min ; et
- une masse volumique inférieure ou égale à 885 kg/m$^3$ (ISO1183),
et

c) 4 à 11 % en poids, sur la base du poids total de la composition de polyéthylène-polypropylène d'un copolymère statistique de polypropylène présentant un $MFR_2$ (ISO1133, charge de 2,16 kg à 230 °C) inférieur ou égal à 1,0 g/10 min ; et
d) 0 à 1,0 % en poids, sur la base du poids total de la composition de polyéthylène-polypropylène, d'un stabilisant ou d'un mélange de stabilisants,
moyennant quoi la composition de polyéthylène-polypropylène présente un module de traction de 850 à 1000 MPa.

6. Composition de polyéthylène-polypropylène selon la revendication 1 présentant un indice de fluidité à chaud de 5,0 à 12,0 g/10 min (ISO1133, 230 °C, 2,16 kg) pouvant être obtenue en mélangeant

a) 71 à 89 % en poids, sur la base du poids total de la composition de polyéthylène-polypropylène, d'un mélange (A) comprenant

A-1) un polypropylène et
A-2) un polyéthylène,

dans laquelle le rapport pondéral polypropylène sur polyéthylène est de 19:1 à 7:3, et dans laquelle le mélange (A) est un matériau recyclé, qui est récupéré à partir de déchets plastiques dérivés de déchets post-consommation et/ou industriels ;
et
b) 7 à 17 % en poids, sur la base du poids total de la composition de polyéthylène-polypropylène, d'un agent compatibilisant (B) qui est un plastomère en $C_2C_8$,
présentant

- un point de fusion par DSC inférieur à 75 °C (ISO11357) ;
- un $MFR_2$ (ISO1133, charge de 2,16 kg à 190 °C) inférieur ou égal à 1,5 g/1,0 min, de préférence inférieur ou égal à 1,0 g/10 min, de manière préférée entre toutes de 0,1 à 0,5 g/10 min ; et
- une masse volumique inférieure ou égale à 885 kg/m$^3$ (ISO1183),
et

c) 4 à 11 % en poids, sur la base du poids total de la composition de polyéthylène-polypropylène d'un copolymère statistique de polypropylène présentant un $MFR_2$ (ISO1133, charge de 2,16 kg à 230 °C) inférieur ou égal à 1,0 g/10 min ; et
d) 0 à 1,0 % en poids, sur la base du poids total de la composition de polyéthylène-polypropylène, d'un stabilisant ou d'un mélange de stabilisants,
moyennant quoi la composition de polyéthylène-polypropylène présente un module de traction de 850 à 1000 MPa.

7. Composition de polyéthylène-polypropylène selon l'une quelconque des revendications précédentes, dans laquelle l'agent compatibilisant (B) présente un point de fusion par DSC inférieur ou égal à 73 °C, de préférence inférieur à 60 °C (ISO11357), de manière préférée entre toutes dans la plage de 38 °C à moins de 60 °C (DSC, ISO11357-3 gradient de température 10 °C/min).

8. Composition de polyéthylène-polypropylène selon l'une quelconque des revendications précédentes, dans laquelle l'agent compatibilisant (B) présente une masse volumique inférieure ou égale à 875 kg/m$^3$ (ISO1183), de préférence de 858 à 867 kg/m$^3$.

9. Composition de polyéthylène-polypropylène selon l'une quelconque des revendications précédentes, moyennant quoi le mélange (A) présente une ou plusieurs des caractéristiques suivantes :

   (i) une teneur en limonène, telle que déterminée par microextraction en phase solide (HS-SPME-GC-MS), de 0,1 ppm à 100 ppm, de préférence de 0,1 ppm à 50 ppm, de manière davantage préférée de 0,1 ppm à 10 ppm,
   (ii) une teneur en polystyrène allant jusqu'à 6,0 % en poids ;
   (iii) une teneur en talc jusqu'à 3 % en poids ;
   (iv) une teneur en polyamide(s) allant jusqu'à 5,0 % en poids ;
   (v) une teneur en craie allant jusqu'à 1,0 % en poids ;
   (vi) une teneur en acides gras, telle que déterminée par microextraction en phase solide (HS-SPME-GC-MS), de 0,1 ppm à 100 ppm.

10. Composition de polyéthylène-polypropylène selon l'une quelconque des revendications précédentes, moyennant quoi le copolymère statistique de polypropylène présente une teneur en éthylène de 3,0 à 6,0 % en poids, et moyennant quoi, de préférence, le copolymère statistique de polypropylène contient uniquement des motifs dérivés du propylène et de l'éthylène.

11. Composition de polyéthylène-polypropylène selon l'une quelconque des revendications précédentes, moyennant quoi les quantités des composants a) à d) représentent 100 % en poids.

12. Article comprenant, de préférence consistant en, la composition de polyéthylène-polypropylène selon l'une des revendications 1 à 11.

13. Procédé de fourniture d'une composition de polyéthylène-polypropylène selon l'une quelconque des revendications 1 à 11, le procédé comprenant les étapes suivantes :

   a) la fourniture d'un mélange (A) comprenant un polypropylène et un polyéthylène à un rapport de 19:1 à 7:3 en une quantité de 52 à 92 % en poids, de préférence de 65 à 91 % en poids, de manière davantage préférée de 70 à 90 % en poids, et de manière préférée entre toutes de 71 à 89 % en poids, sur la base du poids total de la composition de polyéthylène-polypropylène,
   dans lequel le mélange (A) est un matériau recyclé, qui est récupéré à partir de déchets plastiques dérivés de déchets post-consommation et/ou industriels ;
   b) la fourniture d'un agent compatibilisant (B) en une quantité de 5 à 35 % en poids, de préférence de 5 à 22 % en poids, de manière davantage préférée de 6 à 18 % en poids, et de manière préférée entre toutes de 7 à 17 % en poids, sur la base du poids total de la composition de polyéthylène-polypropylène, moyennant quoi l'agent compatibilisant (B) est sélectionné dans le groupe des plastomères en $C_2C_4$, des plastomères en $C_2C_6$ ou des plastomères en $C_2C_8$, l'agent compatibilisant (B) présentant

   - un point de fusion par DSC inférieur à 75 °C, de préférence inférieur ou égal à 73 °C, de manière davantage préférée inférieur à 60 °C et de manière préférée entre toutes dans la plage de 38 °C à 60 °C (ISO11357) ; et
   - un $MFR_2$ (ISO1133, charge de 2,16 kg à 190 °C) inférieur ou égal à 1,5 g/1,0 min, de préférence inférieur ou égal à 1,0 g/10 min, de manière préférée entre toutes de 0,1 à 0,5 g/10 min ; et
   - une masse volumique inférieure ou égale à 885 kg/m$^3$, de préférence une masse volumique inférieure ou égale à 875 kg/m$^3$, de manière préférée entre toutes de 858 à 867 kg/m$^3$ (ISO1183) ;

   c) la fourniture d'un copolymère statistique de polypropylène présentant un $MFR_2$ (ISO1133, charge de 2,16 kg à 230 °C) inférieur ou égal à 1,0 g/10 min en une quantité de 3 à 12 % en poids, de préférence de 4 à 12 % en poids, et de manière préférée entre toutes de 4 à 11 % en poids, par rapport au poids total de la composition de polyéthylène-polypropylène ;
   d) la fusion et le mélange du mélange en présence de 0 à 1,0 % en poids d'un stabilisant ou d'un mélange de stabilisants, par rapport au poids total de la composition de polyéthylène-polypropylène, et
   e) optionnellement une granulation.

14. Utilisation d'un agent compatibilisant (B) conjointement avec un copolymère statistique de polypropylène (C) pour obtenir une résistance au choc sur éprouvette entaillée Charpy (1eA) (non instrumentée, ISO 179-1 à +23 °C) d'au moins 14 kJ/m$^2$ et simultanément un module de traction en MPa (ISO 527-2) d'au moins 850 à 1000 MPa, moyennant quoi l'agent compatibilisant (B) est un plastomère en $C_2C_8$,

présentant

- un point de fusion par DSC inférieur à 75 °C, de préférence inférieur ou égal à 73 °C, de manière davantage préférée inférieur à 60 °C et de manière préférée entre toutes dans la plage de 38 °C à 60 °C (ISO11357) ;
- un $MFR_2$ (ISO1133, charge de 2,16 kg à 190 °C) inférieur ou égal à 1,5 g/1,0 min, de préférence inférieur ou égal à 1,0 g/10 min, de manière préférée entre toutes de 0,1 à 0,5 g/10 min ; et
- une masse volumique inférieure ou égale à 885 kg/m$^3$, de préférence une masse volumique inférieure ou égale à 875 kg/m$^3$, de manière préférée entre toutes de 858 à 867 kg/m$^3$ (ISO1183), et moyennant quoi

le copolymère statistique de polypropylène présente un $MFR_2$ (ISO1133, charge de 2,16 kg à 230 °C) inférieur ou égal à 1,0 g/10 min avec un mélange (A) comprenant
A-1) un polypropylène et
A-2) un polyéthylène,
dans laquelle le rapport pondéral polypropylène sur polyéthylène est de 19:1 à 7:3, et dans laquelle le mélange (A) est un matériau recyclé, qui est récupéré à partir de déchets plastiques dérivés de déchets post-consommation et/ou industriels ; et
dans laquelle le mélange (A) est présent en une quantité de
52 à 92 % en poids, de préférence de 65 à 91 % en poids, de manière davantage préférée de 70 à 90 % en poids, et de manière préférée entre toutes de 71 à 89 % en poids, par rapport à la composition finale de polyéthylène-polypropylène, et
dans laquelle l'agent compatibilisant (B) est présent en une quantité de 5 à 35 % en poids, de préférence de 5 à 22 % en poids, de manière davantage préférée de 6 à 18 % en poids, de manière préférée entre toutes de 7 à 17 % en poids, par rapport à la composition finale de polyéthylène-polypropylène, et dans laquelle
le copolymère statistique de polypropylène présentant un $MFR_2$ (ISO1133, charge de 2,16 kg à 230 °C) inférieur ou égal à 1,0 g/10 min est présent en une quantité de
3 à 12 % en poids, de préférence de 4 à 12 % en poids, et de manière préférée entre toutes de 4 à 11 % en poids, par rapport à la composition finale de polyéthylène-polypropylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2015169690 A1

**Non-patent literature cited in the description**

• **SINGH, G.** ; **KOTHARI, A.** ; **GUPTA, V.** *Polymer Testing*, 2009, vol. 28 (5), 475
• **ZHOU, Z. et al.** *J. Mag. Reson.*, 2007, vol. 187, 225
• **BUSICO, V. et al.** *Macromol. Rapid Commun.*, 2007, vol. 28, 1128
• **CHENG, H. N.** *Macromolecules*, 1984, vol. 17, 1950
• **WANG, W-J.** ; **ZHU, S.** *Macromolecules*, 2000, vol. 33, 1157
• *CHEMICAL ABSTRACTS*, 6683-19-8
• *CHEMICAL ABSTRACTS*, 31570-04-4